# FASCICULE DE BREVET EUROPEEN

(11) **EP 2 616 371 B1**
(45) Date de publication et mention de la délivrance du brevet: **11.05.2016**
(21) Numéro de dépôt: 11773095.2
(22) Date de dépôt: 15.09.2011
(51) Int. Cl.: B65G 47/14

(54) **DISPOSITIF D'ALIMENTATION EN COMPOSANTS ET INSTALLATION COMPRENANT UN TEL DISPOSITIF**
KOMPONENTENZUFÜHRUNGSVORRICHTUNG UND EINHEIT MIT EINER DERARTIGEN VORRICHTUNG
COMPONENT FEED DEVICE AND UNIT COMPRISING SUCH A DEVICE

(30) Priorité: 15.09.2010 FR 1057364
(43) Date de publication de la demande: 24.07.2013
(73) Titulaire: Deflandre, Hervé, 62840 Fleurbaix (FR)
(72) Inventeur: Deflandre, Hervé, 62840 Fleurbaix (FR)
(74) Mandataire: Balesta, Pierre
(86) Numéro de dépôt international: PCT/FR2011/052122
(87) Numéro de publication internationale: WO 2012/035269

(56) Documents cités:
- EP-A1- 0 542 258
- WO-A1-02/20377
- DE-A1- 1 531 068
- DE-A1- 2 905 492
- DE-A1- 3 048 231
- DE-A1- 19 839 664
- DE-C1- 3 742 728
- FR-A- 1 593 909
- FR-A1- 2 727 096
- US-A- 2 800 216
- US-A- 5 394 972
- US-A- 6 164 502

## Description

L'invention concerne un dispositif d'alimentation en composants permettant de doser l'acheminement desdits composants vers un poste de travail en sorte de garantir une alimentation régulière ou continue de celui-ci. L'invention concerne également une installation comprenant de tels dispositifs d'alimentation en composants et des postes de travail sur lesquels sont acheminés lesdits composants en vue de leur utilisation.

De préférence, mais pas exclusivement, les composants sont des bouchons de bouteille, par exemple en aluminium, ou bien des petites bouteilles.

Différents types de dispositifs d'alimentation en composants sont connus actuellement.

Selon un premier type connu, celui-ci consiste en des bols vibrants qui présentent généralement pour inconvénient d'être encombrants sur les postes de travail et d'être peu ergonomiques.

Selon un second type connu, celui-ci consiste en une trémie doseuse qui est remplie en composants, la trémie doseuse comportant à son extrémité inférieure un système de dosage permettant le passage de composants au travers dudit système de dosage, lesdits composants étant extraits de la trémie et tombant sur un tapis convoyeur à bande ou à rouleaux, par exemple. Un inconvénient de ces trémies doseuses concerne l'ergonomie du poste. En effet, de telles trémies doseuses sont généralement agencées à une hauteur plus ou moins importantes en sorte de permettre la chute par gravité des composants sur le tapis convoyeur à bande ou à rouleaux. Il en résulte que l'opérateur doit utiliser un marchepied ou équivalent pour atteindre la partie supérieure de la trémie doseuse et effectuer le remplissage de celle-ci en composants. Une telle opération peut s'avérer plus ou moins contraignante selon le poids des composants conditionnés généralement dans des emballages plus ou moins volumineux.

On connaît également un troisième type de dispositif d'alimentation en composants, lequel comprend une bande transporteuse qui s'étend horizontalement et longitudinalement. Cette bande transporteuse tourne en boucle, permettant l'avance des composants disposés sur le côté supérieur de celle-ci. En outre, un bac est agencé sur le dessus de la bande transporteuse en sorte de contenir les produits reposant sur le côté supérieur de la bande transporteuse et d'éviter que les composants ne tombent sur les côtés latéraux de la bande transporteuse. Ce bac comprend au niveau de sa face aval, attenant à la partie aval de la bande transporteuse, une fenêtre délimitant une zone de passage des composants qui se déplacent sur la bande transporteuse. Ainsi, les composants sont disposés en vrac dans le bac et reposent sur la bande transporteuse qui tourne pour acheminer les composants vers sa partie aval. Ces composants viennent donc en contact sur la face aval du bac, seuls les composants disposés au niveau de la fenêtre attenante au côté supérieur de la bande transporteuse, étant capables de passer au travers de cette face aval du bac. Une fois les composants passés au travers de cette fenêtre, ceux-ci sont acheminés par la partie aval de la bande transporteuse soit sur un convoyeur intermédiaire soit directement sur un poste de travail, par exemple. Un inconvénient de ce type de dispositif est que le passage des composants au travers de la fenêtre, lorsque le bac est rempli en composants, génère des bourrages et permet le passage de composants au travers de la fenêtre par saccades, ayant pour conséquence que des petits tas de composants sont acheminés par la bande transporteuse à intervalles plus ou moins réguliers, ne permettant pas un acheminement des composants en continu sur le poste de travail, en fonction des besoins. Un autre inconvénient est la nécessité de disposer d'un bac dont les côtés latéraux, c'est-à-dire les côtés correspondants aux côtés latéraux de la bande transporteuse, soient disposés de manière attenante vis-à-vis desdits côtés latéraux de la bande transporteuse et évasés, en sorte d'éviter les bourrages ou les blocages de composants lors de leur déplacement à l'intérieur du bac. Un tel évasement des côtés latéraux du bac a pour inconvénient d'augmenter l'encombrement du dispositif d'alimentation. En outre, il est nécessaire avec ce type de dispositif de répartir convenablement les composants disposés en vrac, à l'intérieur du bac en sorte d'avoir une répartition régulière des composants sur la bande transporteuse à l'intérieur dudit bac et de limiter les bourrages ou blocages de ces composants. Cela nécessite d'accéder sur les côtés latéraux de la trémie ou du bac afin d'effectuer le remplissage de celui-ci. EP 0 542 258 A1 décrit un dispositif tel que décrit dans le préambule de la revendication 1.

La présente invention vise à pallier les inconvénients précités et propose à cet effet un dispositif d'alimentation en composants permettant de doser correctement l'acheminement desdits composants notamment sur un poste de travail, et ce sans abimer lesdits composants.

A cet effet, le dispositif d'alimentation en composants comprend une bande transporteuse montée en boucle et comportant un côté supérieur sur lequel reposent les composants durant leur transport et un côté inférieur de retour à vide. On comprend que les composants reposant sur le côté supérieur de la bande transporteuse se déplacent de l'arrière vers l'avant sur le dispositif d'alimentation en composants, du fait que cette bande transporteuse se déplace ou tourne en boucle. A cet effet, le dispositif d'alimentation en composants comprend également des moyens d'entraînement en boucle de la bande transporteuse. De même, le dispositif d'alimentation en composants comprend des moyens de maintien configurés pour contenir les composants sur le côté supérieur de la bande, en sorte d'éviter que les composants ne chutent sur les côtés latéraux de cette bande transporteuse durant son entraînement en boucle. En outre, de manière remarquable, le côté supérieur de la bande transporteuse est configuré pour former un conteneur, notamment en forme de cuvette, comportant une face amont, correspondant à la partie amont dudit côté supérieur de la bande transporteuse, un fond correspondant à la partie centrale dudit côté supérieur de la bande transporteuse et une face aval correspondant à la partie aval dudit côté supérieur de la bande transporteuse. Ces faces amont et aval sont configurées pour favoriser la descente par gravité des composants dans le fond du conteneur. Par ailleurs, la bande transporteuse comprend une face externe et une face interne, les composants étant en contact sur cette face externe lorsqu'ils reposent sur le côté supérieur de la bande. Cette face externe comprend des moyens de retenue des composants configurés pour retenir les composants reposant sur ladite face externe au moins lorsqu'ils sont situés sur la face aval du conteneur.

Ainsi, selon le dispositif d'alimentation en composants de la présente invention, on comprend que l'opérateur peut effecteur avantageusement le remplissage en composants du dispositif d'alimentation en déversant lesdits composants directement au niveau de la face amont du conteneur qui, du fait de l'inclinaison de cette face amont, permet la chute par gravité des composants dans le fond dudit conteneur. En outre, le déplacement du côté supérieur de la bande transporteuse vers l'aval tend à déplacer les composants disposés en vrac dans le conteneur et reposant sur ce côté supérieur de la bande, les moyens de retenue des composants permettant de retenir ces composants sur le côté supérieur de la bande lorsque celle-ci se déplace et que lesdits composants se situent dans la zone de la face aval du conteneur ; ainsi, seuls les composants retenus demeurent sur ladite face aval tandis que l'excédent de composants qui se situent sur cette face aval et qui ne sont pas retenus, retombent par gravité dans le fond du conteneur. En outre, les composants retenus sur la face aval sont ensuite évacués par l'extrémité aval de la bande transporteuse. Ainsi, on assure un acheminement régulier en composants sans risque de bourrage ou de blocage.

Selon l'invention, les moyens de maintien sont constitués de deux plaques disposées verticalement, respectivement de manière attenante aux deux côtés latéraux de la bande transporteuse. Cette disposition verticale des deux plaques présente pour avantage de limiter l'encombrement du dispositif d'alimentation en composants au niveau de ses côtés latéraux et permet en outre de pouvoir disposer plusieurs dispositifs d'alimentation en composants les uns à côté des autres. Cette disposition de plusieurs dispositifs d'alimentation en composants, les uns à côté des autres, est en outre envisageable du fait que le déversement des composants dans le conteneur s'effectue par la face amont, et non sur les côtés latéraux comme cela était le cas avec le dispositif de l'art antérieur. En outre, la mise en oeuvre de plaques verticales est envisageable par rapport au dispositif d'alimentation de l'art antérieur qui nécessite un bac disposant de côtés latéraux évasés, du fait que selon le dispositif d'alimentation en composants de la présente invention, la configuration de la bande en forme de conteneur permet d'effectuer un brassage des composants, évitant leur blocage.

Selon l'invention, le dispositif d'alimentation en composants comprend un tambour aval qui est agencé pour assurer le retour de la bande transporteuse au niveau de son extrémité aval. De même, le dispositif d'alimentation en composants comprend un tambour amont qui est agencé pour assurer le retour de la bande transporteuse au niveau de son extrémité amont. En outre, le dispositif d'alimentation en composants comprend deux rouleaux de retour qui sont agencés pour prendre appui sur la face interne, du côté inférieur de la bande transporteuse. Par ailleurs, les tambours amont et aval sont distants l'un de l'autre selon une configuration permettant le maintien lâche du côté supérieur de la bande transporteuse, les deux rouleaux de retour étant disposés en-dessous des deux tambours amont et aval en sorte d'éviter tout contact entre les faces internes du côté supérieur et du côté inférieur de la bande transporteuse. Cet agencement permet la mise en oeuvre du conteneur en forme de cuvette.

Selon l'invention, les moyens d'entraînement de la bande transporteuse comprennent au moins un moteur configuré pour entraîner en rotation au moins l'un des tambours amont ou aval. On peut en effet envisager la mise en oeuvre d'un moteur au niveau d'un seul tambour, de préférence le tambour aval, permettant une traction sur le côté supérieur de la bande transporteuse qui achemine les composants vers l'aval. Toutefois, en vue de permettre un déplacement de la bande transporteuse dans le sens avant et dans le sens arrière, on peut envisager la mise en oeuvre de deux moteurs, l'un entraînant en rotation le tambour aval et l'autre le tambour amont. En outre, en vue de l'utilisation d'un seul moteur, on peut également envisager l'utilisation de moyens d'entraînement qui comprennent un moteur entraînant le tambour aval et un système de transmission agencé entre le moteur d'entraînement et le tambour amont, voire inversement.

Selon l'invention, deux plaques de support amont et aval sont agencées avec une inclinaison sous le côté supérieur de la bande transporteuse, respectivement dans les zones des faces amont et aval du conteneur, et prennent appui sur la face interne dudit côté supérieur de la bande transporteuse, les plaques de support amont et aval formant entre elles un Vé. Cela présente pour avantage de soulager le côté supérieur de la bande transporteuse et de maintenir une inclinaison préférentielle des faces amont et aval du conteneur, cette inclinaison pouvant influer sur l'efficacité des moyens de retenue.

De préférence selon l'invention, des moyens de réglage sont configurés pour modifier l'inclinaison des plaques de support amont et aval. Cela présente pour avantage d'effectuer un réglage précis en fonction du type de composants disposés dans le dispositif d'alimentation.

De manière préférentielle, le dispositif d'alimentation en composants objet de l'invention comprend une plaque de support centrale agencée sous le côté supérieur de la bande transporteuse dans la zone du fond, cette plaque de support centrale prenant appui sur la face interne du côté supérieur de ladite bande transporteuse, ladite plaque de support centrale étant configurée pour éviter tout contact du fond avec le côté inférieur de la bande transporteuse.

Selon l'invention, les moyens de retenue sont constitués par des taquets disposés transversalement c'est-à-dire perpendiculairement au sens longitudinal de la bande, sur la face externe de ladite bande transporteuse, avec un intervalle entre chaque taquet. Les dimensions de ces taquets dépendront du type de composants, c'est-à-dire de la dimension desdits composants, lesdits taquets devant assurer une retenue de ces composants lorsque ceux-ci se situent sur la face aval du conteneur, inclinée. De préférence, les taquets sont espacés d'une distance comprise entre 30 cm et 70 cm. Encore de préférence, l'espacement entre deux taquets successifs est très supérieur à la dimension des composants, et notamment, au moins égal à dix fois la plus grande dimension de l'un des composants dosés grâce au dispositif d'alimentation selon l'invention. Encore de préférence, la hauteur des taquets correspond sensiblement à l'épaisseur des composants. Si le composant est un bouchon cylindrique de bouteille, la hauteur du taquet correspond sensiblement à la longueur du bouchon. Cette configuration permet d'améliorer la régularité de l'alimentation en composants afin d'éviter tout bourrage en sortie du dispositif.

Selon un autre aspect de l'invention, celle-ci concerne une installation pour le conditionnement de liquides dans des bouteilles fermées au moyen de bouchons, ladite installation comprenant au moins un dispositif d'alimentation en composants du type bouchons, objet de la présente invention. En outre, cette installation objet de l'invention comprend un convoyeur de dépose agencé en-dessous de l'extrémité aval de la bande transporteuse, ledit convoyeur de dépose alimentant un poste de bouchonnage des bouteilles.

L'invention porte en outre sur une utilisation d'un dispositif d'alimentation selon l'invention, dans lequel on déverse les composants dans l'enceinte de manière à remplir entièrement le conteneur en forme de cuvette avant de faire fonctionner ledit dispositif.

Avantageusement, on déverse les composants dans l'enceinte de manière à remplir le conteneur en forme de cuvette, les composants étant déversés sur une hauteur correspondant à celle du cylindre aval.

De préférence, mais pas exclusivement, les composants sont des bouchons de bouteille.

D'autres caractéristiques de la présente invention apparaîtront à la lecture de la description suivante qui s'appuie sur un mode préférentiel de conception non limitatif, illustré au moyen de figures parmi lesquelles :
- la figure 1 illustre une installation qui comprend un dispositif d'alimentation en composants objet de la présente invention,
- la figure 2 illustre en vue de dessus le dispositif d'alimentation en composants.

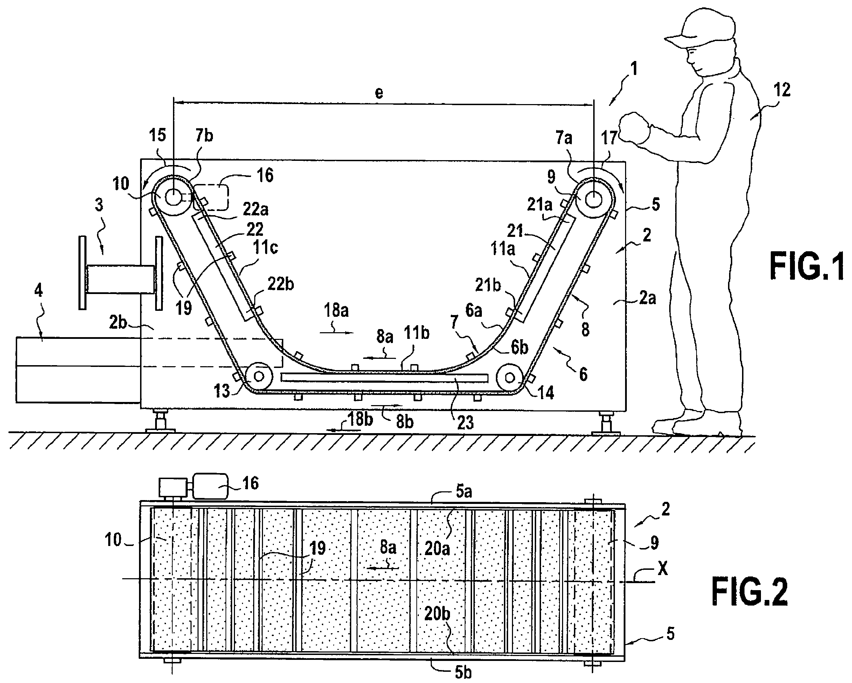

Sur la figure 1 est illustrée une installation 1 notamment destinée au conditionnement de liquide dans des bouteilles fermées au moyen de bouchons. Sur cette figure 1 sont illustrés un dispositif d'alimentation 2 en composants de type bouchon, un convoyeur de dépose 3 et un poste de travail 4 consistant notamment en un poste de remplissage de bouteilles en liquide et en un poste de bouchonnage desdites bouteilles au moyen de bouchons. On peut toutefois envisager la mise en oeuvre d'une telle installation pour d'autres applications sans sortir du cadre de la présente invention. Il conviendra en ce cas d'adapter le dispositif d'alimentation2 en composants en fonction du type de composant à acheminer sur le poste de travail 4.

Le dispositif d'alimentation 2 en composants comprend une enceinte 5 dans laquelle est intégrée une bande transporteuse 6. De préférence, l'enceinte est fermée au moins sur ses bords latéraux de manière à maintenir les composants sur la bande transporteuse 6. La bande transporteuse est de préférence entièrement logée dans le volume de l'enceinte 5. Cette bande transporteuse 6 s'étend longitudinalement dans l'enceinte 5. On définit par sens longitudinal celui de l'axe X illustré en figure 2. Cette bande transporteuse 6 comprend un côté supérieur 7 et un côté inférieur 8 du fait de son montage en boucle tel qu'on peut le constater sur la figure 1.

La bande transporteuse 6 comprend une face externe 6a et une face interne 6b tel qu'illustré sur la figure 1. La bande transporteuse tourne dans le sens des flèches 8a, 8b, ce qui assure le déplacement dans le sens de la flèche 8a, des composants reposant sur le côté supérieur 7 de la bande transporteuse 6. Cette bande transporteuse 6 tourne en boucle ; on comprend donc que le côté inférieur 8 de cette bande se déplace au contraire dans le sens de la flèche 8b, à vide, c'est-à-dire en ne transportant aucun composant.

On constate sur les figures 1 et 2 la présence d'un tambour disposé en amont 9 du dispositif d'alimentation 2, ainsi que la présence d'un tambour disposé en aval 10 dudit dispositif d'alimentation 2. On constate sur la figure 1 que le tambour amont 9 et le tambour aval 10 sont disposés de préférence à une hauteur identique. On pourrait toutefois envisager un décalage en hauteur entre ces tambours amont 9 et aval 10 sans sortir du cadre de l'invention, et notamment de disposer le tambour aval 10 à une hauteur plus importante que le tambour amont 9. En outre, ces deux tambours sont disposés transversalement, c'est-à-dire selon un axe perpendiculaire à l'axe longitudinal X et sont écartés l'un de l'autre avec un entraxe « e » de dimension inférieure à la longueur du côté supérieur 7 de la bande 6, lorsque celle-ci est tendue. Cela permet de maintenir le côté supérieur 7 de la bande transporteuse 6 lâche, de telle sorte que celle-ci présente une forme de cuvette telle qu'illustrée sur la figure 1 permettant de contenir les composants, lorsqu'ils sont déversés dans l'enceinte 5.

Cette cuvette comprend une face amont 11a, un fond 11b et une face aval 11c, les faces amont 11a et aval 11c étant inclinées vers le haut et l'extérieur respectivement vers l'amont et vers l'aval du fait de la forme en cuvette. De préférence, l'inclinaison par rapport à un plan horizontal est au moins égale à 30°. Ainsi, lorsque l'opérateur 12 déverse les composants, celui-ci se positionne au niveau de l'extrémité amont 2a du dispositif d'alimentation 2 et déverse lesdits composants par le dessus de l'enceinte 5, lesdits composants tombant sur la face amont 11a inclinée. Du fait de la pente existante ou de l'inclinaison de cette face amont 11a, on comprend que les composants tombent ou glissent par gravité dans le fond 11b de la cuvette. En outre, on constate au moyen des figures 1 et 2 que cette cuvette comprend un volume capable de contenir une certaine quantité de composants disposés en vrac. La capacité du conteneur en forme de cuvette sera adaptée au volume des composants et à l'application envisagée.

On constate en outre sur la figure 1 la présence de deux rouleaux de retour 13 et 14 disposés transversalement sur le dispositif d'alimentation 1 et prenant appui sur la face interne 6b, du côté inférieur 8 de la bande transporteuse 6, tel qu'illustré sur la figure 1. On constate également sur cette figure 1 que les tambours amont 9 et aval 10 sont en contact de la face interne 6b de la bande transporteuse 6 et adhèrent à celle-ci en sorte d'éviter le glissement de la bande transporteuse 6 vis-à-vis des tambours amont 9 et aval 10. Ainsi, l'entraînement en rotation d'au moins un des tambours amont 9 et/ou aval 10 permet le déplacement de la bande transporteuse 6.

Le sens de déplacement selon les flèches 8a, 8b illustré en figure 1 est obtenu lors d'une rotation des tambours amont 9 et aval 10 ainsi que des rouleaux de retour 13 et 14 dans le sens trigonométrique illustré par la flèche 15 sur la figure 1. On constate sur la figure 1 qu'un moteur 16 est agencé en partie supérieure de l'extrémité aval 2b de l'enceinte, ce moteur d'entraînement engrenant avec le tambour aval 10 en sorte de permettre sa rotation dans le sens trigonométrique illustré par la flèche 15, l'entraînement en rotation du tambour aval 10 permettant le déplacement en boucle de la bande transporteuse 6 selon le sens des flèches 8a, 8b illustré sur la figure 1. Cet entraînement en rotation du tambour aval 10 permet d'assurer une traction sur l'extrémité aval 7b du côté supérieur 7 de la bande transporteuse 6. De préférence, le moteur d'entraînement 16 est à double sens de rotation et l'on prévoit un système de transmission agencé entre ledit moteur 16 et le tambour amont 9 en sorte de pouvoir effectuer la rotation du tambour amont 9 dans le sens horaire illustré par la flèche 17 en figure 1 et ainsi, inverser le sens de rotation de la bande transporteuse 6 qui se déplace selon le sens des flèches 18a, 18b, l'entraînement par le tambour amont 9 assurant une traction au niveau de l'extrémité amont 7a du côté supérieur 7 de ladite bande transporteuse 6. Bien entendu, on pourrait prévoir deux moteurs d'entraînement séparés pour entraîner respectivement en rotation dans un premier sens trigonométrique, illustré par la flèche 15, le tambour aval 10 et dans un second sens horaire, illustré par la flèche 17, le tambour amont 9.

On constate sur les figures 1 et 2 la présence de taquets 19 agencés transversalement sur la face externe 6a de la bande transporteuse 6 de préférence avec un espacement régulier entre lesdits taquets 19. Ces taquets 19 sont dimensionnés en sorte de permettre la retenue de composants disposés dans le conteneur en forme de cuvette. De préférence, la distance entre deux taquets est comprise entre 30 et 70 cm. De préférence, mais pas nécessairement, la hauteur d'un taquet est comprise entre 1 et 3 centimètres. Encore de préférence, la hauteur d'un taquet correspond à l'épaisseur du composant. Lors du déplacement de la bande transporteuse 6 dans le sens des flèches 8a, 8b, on comprend que les composants directement en contact sur la face externe 6a du côté supérieur 7 de la bande transporteuse 6 sont acheminés en direction de l'extrémité aval 7b dudit côté supérieur 7. Dans la zone de la face aval 11c de la cuvette, les taquets 17 permettent de retenir les composants reposant directement sur le côté supérieur 7 de la bande transporteuse 6, tandis que l'excédent de composants est refoulé dans le fond 11b de la cuvette du fait de l'inclinaison de cette face aval 11c, les taquets 19 empêchant au contraire aux composants au contact de ceux-ci de glisser et de redescendre dans le fond 11b de la cuvette. Ainsi, les composants peuvent être acheminés jusqu'à l'extrémité aval 7b du côté supérieur 7 de la bande transporteuse 6 au niveau de laquelle, la bande transporteuse 6 atteint sa position de retour en sens inverse selon la flèche 8b. On comprend alors que les composants ayant atteint l'extrémité aval 7b chutent par gravité dans le convoyeur de dépose 3 de l'installation 1, la bande transporteuse 6 effectuant ensuite un retour à vide sur son côté inférieur 8.

On comprend en outre que lorsque les tambours amont 9 et aval 10 tournent dans le sens inverse selon le sens de la flèche 17, la bande transporteuse 6 se déplace alors dans le sens des flèches 18a, 18b, ce qui permet inversement d'évacuer les composants au niveau de l'extrémité amont 7a du côté supérieur 7 de la bande transporteuse 6 selon le même principe de fonctionnement, les taquets 19 empêchant alors la chute des composants du fait de l'inclinaison de la face amont 11a de la cuvette. Cette inversion du sens de rotation peut s'avérer avantageuse notamment pour effectuer une vidange de la cuvette et disposer d'autres types de composants dans le dispositif d'alimentation 2.

Afin de contenir convenablement les composants en position sur le côté supérieur 7 de la bande transporteuse 6, disposé en forme de cuvette, l'enceinte 5 comprend deux côtés latéraux 5a, 5b illustrés en figure 2, ces côtés latéraux 5a, 5b étant disposés verticalement et de manière attenante aux côtés latéraux 20a, 20b respectifs de la bande transporteuse 6. Le positionnement de ces côtés latéraux 5a, 5b de l'enceinte 5, verticalement est par ailleurs envisageable du fait que le côté supérieur 7 de la bande transporteuse 6 est disposé en forme de cuvette, ce qui assure lors d'un déplacement de la bande transporteuse 6, un brassage des composants disposés en vrac dans la cuvette, ce brassage évitant tout blocage ou bourrage desdits composants. Ces côtés latéraux 5a, 5b de l'enceinte 5 sont constitués par deux plaques verticales qui bordent les côtés latéraux 20a, 20b de la bande transporteuse 6.

On constate sur la figure 1 la présence d'une plaque de support amont 21 et d'une plaque de support aval 22 disposées à l'intérieur de la bande transporteuse 6 et prenant appui sur la face interne 6b du côté supérieur 7. On constate que ces plaques de support amont 21 et aval 22 sont disposées avec une inclinaison qui permet de définir l'inclinaison des faces amont et aval 11a et 11c de la cuvette. Cette inclinaison permet d'influer sur le refoulement des composants dans le fond 11b de la cuvette. On pourra en outre envisager des moyens de réglage de l'inclinaison de ces plaques de support amont 21 et aval 22 en sorte de modifier l'inclinaison des faces amont 11a et aval 11c de la cuvette, notamment en fonction du type de composant disposé dans le dispositif d'alimentation 2. De tels moyens de réglage peuvent, par exemple, être mis en oeuvre en montant les premières extrémités 21a, 22a des plaques de support amont 21 et aval 22 en liaison pivot selon des axes transversaux par rapport aux côtés latéraux 5a, 5b de l'enceinte 5, tandis que les secondes extrémités 21b, 22b de ces plaques de support amont 21 et aval 22 sont montées en translation circulaire vis-à-vis desdits côtés latéraux 5a, 5b de l'enceinte 5, des moyens de blocage tels que par exemple des vis de blocage, étant prévus entre les secondes extrémités 21b, 22b et les côtés latéraux 5a, 5b.

On constate également la présence d'une plaque de support centrale 23 sur la figure 1, cette plaque de support centrale 23 prenant appui sur la face interne 6b du côté supérieur 7. Cette plaque de support centrale 23 évite notamment tout contact avec le côté inférieur 8 de la bande transporteuse. En outre, les deux rouleaux de retour 13, 14 qui assurent une mise en tension du côté inférieur 8 de la bande transporteuse 6, sont disposés à une distance suffisante vis-à-vis des tambours amont 9 et aval 10 en sorte d'éviter également le contact avec le fond 12b de la cuvette.

D'autres caractéristiques peuvent être envisagées sans sortir du cadre de la présente invention. On pourra notamment envisager des variantes de moyens de retenue en remplacement des taquets 19. On pourra en outre prévoir une installation équipée de plusieurs dispositifs d'alimentation 2 disposés les uns à côté des autres du fait de la position verticale des côtés latéraux 5a, 5b de l'enceinte 5 et du remplissage en composants du dispositif d'alimentation 2, au niveau de son extrémité amont 2a, ce qui limite l'encombrement de l'installation, chaque dispositif étant en ce cas adapté au type de composant à recevoir.

On peut en outre prévoir un dispositif d'alimentation 2 objet de l'invention, sur lequel sont supprimées les plaques de support amont 21, aval 22 et centrale 23, le côté supérieur 7 de la bande transporteuse 6 étant simplement suspendu au niveau de ses extrémités 7a, 7b, entre les tambours amont 9 et aval 10 et formant ainsi une cuvette.

Dans cet exemple, on déverse les composants sur la bande transporteuse de manière à remplir la cuvette sur une hauteur correspondant sensiblement à celle du cylindre aval 10. L'opérateur met ensuite en route le dispositif selon l'invention qui va doser et convoyer régulièrement les composants.

## Revendications

1. Dispositif d'alimentation (2) en composants permettant de doser l'acheminement des composants notamment sur un poste de travail, le dispositif comprenant une bande transporteuse (6) montée en boucle et comportant un côté supérieur (7) sur lequel reposent les composants durant leur transport et un côté inférieur (8) de retour à vide, des moyens d'entraînement en boucle (9,10,13,14,16) de la bande transporteuse (6), dans lequel le côté supérieur (7) de la bande transporteuse (6) est configuré pour former un conteneur en forme de cuvette, comportant une face amont (11a), un fond (11b) et une face aval (11C), lesdites faces amont (11a) et aval (11c) étant configurées pour favoriser la descente par gravité des composants dans le fond (11b) du conteneur, la bande transporteuse (6) comprenant une face externe (6a) et une face interne (6b), la face externe (6a) comprenant des moyens de retenue (19) des composants configurés pour retenir les composants reposant sur ladite face externe (6a) au moins lorsqu ils sont situés sur la face aval (11c), un tambour aval (10) étant agencé pour assurer le retour de la bande transporteuse (6) au niveau de son extrémité aval, un tambour amont (9) étant agencé pour assurer le retour de la bande transporteuse (6) au niveau de son extrémité amont et deux rouleaux de retour (13,14) étant agencés pour prendre appui sur la face interne (6b), du côté inférieur (8) de la bande transporteuse (6), les tambours amont (9) et aval (10) étant distants l'un de l'autre selon une configuration permettant de maintenir lâche le côté supérieur (7) de la bande transporteuse (6), les deux rouleaux de retour (13, 14) étant disposés en dessous des deux tambours amont (9) et aval (10) en sorte d'éviter tout contact entre les côtés supérieur (7) et inférieur (8) de la bande transporteuse (6), **caractérisé en ce que** le dispositif comprend une enceinte (5) dans laquelle est intégrée la bande transporteuse (6) et des moyens de maintien (5a, 5b) configurés pour contenir les composants sur le côté supérieur (7) de la bande transporteuse (6), lesdits moyens de maintien étant constitués de deux plaques verticales (5a, 5b) de l'enceinte (5) qui bordent les deux côtés latéraux (20a, 20b) de la bande transporteuse (6).

2. Dispositif d'alimentation (2) en composants selon la revendication **1**, dans lequel les moyens d'entraînement comprennent au moins un moteur (16) configuré pour entraîner en rotation au moins l'un des tambours amont (9) ou aval (10).

3. Dispositif d'alimentation (2) en composants selon la revendication **2**, dans lequel les moyens d'entraînement comprennent un moteur (16) entraînant le tambour aval (10) et un système de transmission agencé entre le moteur (16) et le tambour amont (9).

4. Dispositif d'alimentation (2) selon l'une quelconque des revendications **1** à **3**, **caractérisé en ce que** le tambour amont (9) et le tambour aval (10) sont disposés à une hauteur identique.

5. Dispositif d'alimentation (2) en composants selon l'une quelconque des revendications **1** à **4**, dans lequel deux plaques de support amont (21) et aval (22) sont agencées avec une inclinaison sous le côté supérieur (7) de la bande transporteuse (6), respectivement dans les zones des faces amont (11a) et aval (11c), et prennent appui sur la face interne (6b) dudit côté supérieur (7) de la bande transporteuse (6), lesdites plaques de support amont (21) et aval (22) formant entre elles un V.

6. Dispositif d'alimentation (2) en composants selon la revendication **5**, dans lequel des moyens de réglage sont configurés pour modifier l'inclinaison des plaques de support amont (21) et aval (22).

7. Dispositif d'alimentation (2) en composants selon l'une quelconque des revendications **1 à 6**, dans lequel une plaque de support centrale (23) est agencée sous le côté supérieur (7) de la bande transporteuse (6) dans la zone du fond (11b) du conteneur et prend appui sur la face interne (6b) dudit côté supérieur (7) de la bande transporteuse (6), ladite plaque support centrale (23) étant configurée pour soulager le fond (11b) du conteneur et éviter tout contact avec le côté inférieur (8) de la bande transporteuse (6).

8. Dispositif d'alimentation (2) en composants selon l'une quelconque des revendications **1** à **6**, dans lequel les moyens de retenue sont constitués de taquets (19) disposés transversalement sur la face externe (6a) de la bande transporteuse (6) avec un intervalle entre eux.

9. Dispositif d'alimentation (2) en composants selon la revendication **8**, dans lequel les taquets sont espacés d'une distance comprise entre 30 et 70 cm.

10. Dispositif d'alimentation (2) en composants selon la revendication **8** ou **9**, pris en combinaison avec une pluralité de composants présentant une épaisseur, **caractérisé en ce que** les taquets présentent une hauteur sensiblement égale à l'épaisseur des composants.

11. Installation (1) pour le conditionnement de liquides dans des bouteilles fermées au moyen de bouchons, ladite installation comprenant au moins un dispositif d'alimentation (2) en composants du type bouchons objet de l'une quelconque des revendications **1** à **10**.

12. Installation (1) selon la revendication **11**, comprenant un convoyeur de dépose (3) agencé en-dessous de l'extrémité aval (7b) de la bande transporteuse (6), ledit convoyeur de dépose (3) alimentant un poste (4) de bouchonnage des bouteilles.

13. Utilisation d'un dispositif d'alimentation selon l'une quelconque des revendications **1** à **10**, dans lequel on déverse les composants dans l'enceinte (5) de manière à remplir entièrement le conteneur en forme de cuvette avant de faire fonctionner ledit dispositif.

14. Utilisation d'un dispositif d'alimentation selon l'une quelconque des revendications **1** à **10**, dans laquelle on déverse les composants dans l'enceinte (5) de manière à remplir le conteneur en forme de cuvette, les composants étant déversés sur une hauteur correspondant à celle du tambour aval (10).

15. Utilisation selon la revendication **13** ou **14**, dans laquelle les composants sont des bouchons de bouteille.

## Patentansprüche

1. Komponentenzuführungsvorrichtung (2), die es ermöglicht, die Zuführung der Komponenten insbesondere an einer Arbeitsstation zu dosieren, wobei die Vorrichtung ein Förderband (6), das ein einer Schleife montiert ist und eine Oberseite (7), auf der die Komponenten während ihrer Beförderung liegen, und eine leer zurücklaufende Unterseite (8) umfasst, und Mittel (9, 10, 13, 14, 16) zum Antreiben des Förderbandes (6) in einer Schleife umfasst, wobei die Oberseite (7) des Förderbandes (6) derart ausgeführt ist, dass sie einen wannenartigen Behälter bildet, umfassend eine stromaufwärtige Seite (11 a), einen Boden (11 b) und eine stromabwärtige Seite (11 c), wobei die stromaufwärtigen (11a) und stromabwärtigen (11 c) Seiten derart ausgeführt sind, dass sie das Absinken der Komponenten durch Schwerkraft auf den Boden (11b) des Behälters begünstigen, wobei das Förderband (6) eine Außenseite (6a) und eine Innenseite (6b) umfasst, wobei die Außenseite (6a) Mittel (19) zum Halten der Komponenten umfasst, die derart ausgeführt sind, dass sie die auf der Außenseite (6a) liegenden Komponenten zumindest dann halten, wenn sie sich auf der stromabwärtigen Seite (11 c) befinden, wobei eine stromabwärtige Trommel (10) dazu vorgesehen ist, das Wenden des Förderbandes (6) im Bereich seines stromabwärtigen Endes zu gewährleisten, wobei eine stromaufwärtige Trommel (9) dazu vorgesehen ist, das Wenden des Förderbandes (6) im Bereich seines stromaufwärtigen Endes zu gewährleisten, und wobei zwei Umlenkrollen (13, 14) dazu vorgesehen sind, auf der Innenseite (6b) auf der Unterseite (8) des Förderbandes (6) aufzuliegen, wobei die stromaufwärtigen (9) und stromabwärtigen (10) Trommeln voneinander derart entfernt sind, dass es möglich ist, die Oberseite (7) des Förderbandes (6) locker zu halten, wobei die beiden Umlenkrollen (13, 14) unter den beiden stromaufwärtigen (9) und stromabwärtigen (10) Trommeln angeordnet sind, um jeden Kontakt zwischen den Ober- (7) und Unterseiten (8) des Förderbandes (6) zu vermeiden, **dadurch gekennzeichnet, dass** die Vorrichtung ein Behältnis (5), in dem das Förderband (6) integriert ist, und Haltemittel (5a, 5b) umfasst, die dazu vorgesehen sind, die Komponenten auf der Oberseite (7) des Förderbandes (6) zu halten, wobei die Haltemittel aus zwei vertikalen Platten (5a, 5b) des Behältnisses (5) bestehen, die an die beiden Seiten (20a, 20b) des Förderbandes (6) angrenzen.

2. Komponentenzuführungsvorrichtung (2) nach Anspruch 1, bei der die Antriebsmittel mindestens einen Motor (16) umfassen, der dazu vorgesehen ist, mindestens eine der stromaufwärtigen (9) oder stromabwärtigen (10) Trommeln anzutreiben.

3. Komponentenzuführungsvorrichtung (2) nach Anspruch 2, bei der die Antriebsmittel einen Motor (16), der die stromabwärtige Trommel (10) antreibt, und ein Übertragungssystem umfassen, das zwischen dem Motor (16) und der stromaufwärtigen Trommel (9) angeordnet ist.

4. Zuführungsvorrichtung (2) nach einem der Ansprüche 1 bis 3, **dadurch gekennzeichnet, dass** die stromaufwärtige Trommel (9) und die stromabwärtige Trommel (10) auf einer identische Höhe angeordnet sind.

5. Komponentenzuführungsvorrichtung (2) nach einem der Ansprüche 1 bis 4, bei der zwei stromaufwärtige (21) und stromabwärtige (22) Stützplatten mit einer Neigung unter der Oberseite (7) des Förderbandes (6) in den Zonen der stromaufwärtigen (11 a) bzw. stromabwärtigen (11c) Seiten angeordnet sind und auf der Innenseite (6b) der Oberseite (7) des Förderbandes (6) aufliegen, wobei die stromaufwärtigen (21) und stromabwärtigen (22) Stützplatten zwischen sich ein V bilden.

6. Komponentenzuführungsvorrichtung (2) nach Anspruch 5, bei der Einstellungsmittel dazu vorgesehen sind, die Neigung der stromaufwärtigen (21) und stromabwärtigen (22) Stützplatten zu verändern.

7. Komponentenzuführungsvorrichtung (2) nach einem der Ansprüche 1 bis 6, bei der eine zentrale Stützplatte (23) unter der Oberseite (7) des Förderbandes (6) in der Zone des Bodens (11b) des Behälters angeordnet ist und auf der Innenseite (6b) der Oberseite (7) des Förderbandes (6) aufliegt, wobei die zentrale Stützplatte (23) dazu vorgesehen ist, den Boden (11 b) des Behälters zu entlasten und jeden Kontakt mit der Unterseite (8) des Förderbandes (6) zu vermeiden.

8. Komponentenzuführungsvorrichtung (2) nach einem der Ansprüche 1 bis 6, bei der die Haltemittel von Keilen (19) gebildet sind, die quer auf der Außenseite (6a) des Förderbandes (6) mit einem Abstand zwischen ihnen angeordnet sind.

9. Komponentenzuführungsvorrichtung (2) nach Anspruch 8, bei der die Keile in einem Abstand zwischen 30 und 70 cm angeordnet sind.

10. Komponentenzuführungsvorrichtung (2) nach Anspruch 8 oder 9 in Kombination mit einer Vielzahl Komponenten, die eine Dicke aufweisen, **dadurch gekennzeichnet, dass** die Keile eine Höhe im Wesentlichen gleich der Dicke der Komponenten aufweisen.

11. Anlage (1) zur Verpackung von Flüssigkeiten in Flaschen, die mit Hilfe von Stöpseln geschlossen werden, wobei die Anlage mindestens eine Zuführungsvorrichtung (2) von Komponenten vom Typ Korken nach einem der Ansprüche 1 bis 10 umfasst.

12. Anlage (1) nach Anspruch 11, umfassend einen Ablageförderer (3), der unter dem stromabwärtigen Ende (7b) des Förderbandes (6) angeordnet ist, wobei der Ablageförderer (3) eine Station (4) zum Verkorken der Flaschen versorgt.

13. Verwendung einer Zuführungsvorrichtung nach einem der Ansprüche 1 bis 10, bei der die Komponenten in das Behältnis (5) eingebracht werden, um den wannenartigen Behälter zur Gänze zu füllen, bevor die Vorrichtung in Betrieb genommen wird.

14. Verwendung einer Zuführungsvorrichtung nach einem der Ansprüche 1 bis 10, bei der die Komponenten in das Behältnis (5) eingebracht werden, um den wannenartigen Behälter zu füllen, wobei die Komponenten auf einer Höhe entsprechend jener der stromabwärtigen Trommel (10) eingebracht werden.

15. Verwendung nach Anspruch 13 oder 14, bei der die Komponenten Flaschenkorken sind.

## Claims

1. A component feed device (2) serving to meter the delivery of components, in particular to a workstation, the device comprising a conveyor belt (6) mounted in a loop and having an upper strand (7) on which the components rest while being transported and a lower strand (8) for returning empty, drive means (9, 10, 13, 14, 16) for driving the conveyor belt (6) in a loop, in which the upper strand (7) of the conveyor belt (6) is configured to form a bowl-shaped container having an upstream face (11a), a bottom (11b) and a downstream face (11c), said upstream and downstream faces (11a, 11c) being configured to encourage components to move down under gravity to the bottom (11b) of the container, the conveyor belt (6) having an outside face (6a) and an inside face (6b), the outside face (6a) having component retaining means (19) configured to retain the components resting on said outside face (6a) at least when they are situated on the downstream face (11c), a downstream drum (10) being arranged to return the conveyor belt (6) at its downstream end, an upstream drum (9) being arranged to return the conveyor belt (6) at its upstream end, and two return rollers (13, 14) being arranged to bear against the inside face (6b) of the lower strand (8) of the conveyor belt (6), the upstream and downstream drums (9, 10) being spaced apart from each other in a configuration that enables the upper strand (7) of the conveyor belt (6) to be kept slack, the two return rollers (13, 14) being arranged lower than the upstream and downstream drums (9, 10) so as to avoid any contact between the upper and lower strands (7, 8) of the conveyor belt (6), **characterized in that** the device comprises an enclosure (5) in which the conveyor belt (6) is incorporated and holder means (5a, 5b) configured to contain the components on the upper strand (7) of the conveyor belt (6), said holder means being constituted by two vertical plates (5a, 5b) of the enclosure (5) located beside the sides (20a, 20b) of the conveyor belt (6).

2. A component feed device (2) according to claim 1, wherein the drive means comprise at least one motor (16) configured to drive at least one of the upstream and downstream drums (9, 10) in rotation.

3. A component feed device (2) according to claim 2, wherein the drive means comprise a motor (16) driving the downstream drum (10) and a transmission system arranged between the motor (16) and the upstream drum (9).

4. A feed device according to any one of claims **1 to 3**, **characterized in that** the upstream drum (9) and the downstream drum (10) are arranged at identical heights.

5. A component feed device (2) according to any one of claims **1 to 4**, wherein two support plates, an upstream support plate (21) and a downstream support plate (22), are arranged at an angle of inclination under the upper strand (7) of the conveyor belt (6), respectively in the regions of the upstream and downstream faces (11a, 11c), and by bearing against the inside face (6b) of said upper strand (7) of the conveyor belt (6), said upstream and downstream support plates (21, 22) form a V-shape between each other.

6. A component feed device (2) according to claim **5**, wherein adjustment means are configured to modify the angle of inclination of the upstream and downstream support plates (21, 22).

7. A component feed device (2) according to any one of claims **1 to 6**, wherein a central support plate (23) is arranged under the upper strand (7) of the conveyor belt (6) in the region of the bottom (11b) of the container and bears against the inside face (6b) of said upper strand (7) of the conveyor belt (6), said central support plate (23) being configured to support the bottom (11b) of the container and avoid any contact with the lower strand (8) of the conveyor belt (6).

8. A component feed device (2) according to any one of claims **1 to 6**, wherein the retaining means are constituted by slats (19) arranged transversely on the outside face (6a) of the conveyor belt (6) with gaps between them.

9. A component feed device according to claim 8, wherein the slats are spaced apart at a distance lying in the range 30 cm to 70 cm.

10. A component feed device according to claim 8 or claim **9**, taken in combination with a plurality of components presenting a component thickness, the device being **characterized in that** the slats present a height that is substantially equal to the component thickness.

11. An installation (1) for packaging liquids in bottles that are closed by means of stoppers, said installation comprising at least one device (2) for feeding stopper type components as claimed in any one of claims **1 to 10.**

12. An installation (1) according to claim **11**, having a removal conveyor (3) arranged below the downstream end (7b) of the conveyor belt (6), said removal conveyor (3) feeding a workstation (4) for stopping bottles.

13. The use of a feed device according to any one of claims **1 to 10**, wherein components are poured into the enclosure (5) in such a manner as to fill the bowl-shaped container completely before putting said device into operation.

14. The use of a feed device according to any one of claims **1 to 10**, wherein the components are poured into the enclosure (5) in such a manner as to fill the bowl-shaped container, the components being poured to a depth corresponding to the height of the downstream cylinder (10).

15. A use according to claim **13** or claim **14**, wherein the components are stoppers for bottles.
